# EUROPÄISCHE PATENTSCHRIFT

(11) **EP 3 155 039 B1**
(45) Veröffentlichungstag und Bekanntmachung des Hinweises auf die Patenterteilung: **16.05.2018**
(21) Anmeldenummer: 15724177.9
(22) Anmeldetag: 22.05.2015
(51) Int. Cl.: C08K 3/22

(54) **LASERMARKIERBARE UND LASERSCHWEISSBARE POLYMERE MATERIALIEN**
LASER MARKABLE AND LASER WELDABLE POLYMER MATERIALS
MATÉRIAUX POLYMÈRES MARQUABLES ET SOUDABLES AU LASER

(30) Priorität: 10.06.2014 DE 102014008186
(43) Veröffentlichungstag der Anmeldung: 19.04.2017
(73) Patentinhaber: Merck Patent GmbH, 64293 Darmstadt (DE)
(72) Erfinder: RUEGER, Reinhold, 63322 Roedermark (DE); QUITTMANN, Ulrich, 65439 Floersheim (DE)
(86) Internationale Anmeldenummer: PCT/EP2015/001058
(87) Internationale Veröffentlichungsnummer: WO 2015/188917

(56) Entgegenhaltungen:
- EP-A2- 0 448 946
- WO-A1-2006/029677
- WO-A1-2006/042623

## Beschreibung

Die vorliegende Erfindung betrifft lasermarkierbare und laserschweißbare polymere Materialien, die sich dadurch auszeichnen, dass sie als Absorber mindestens ein mit Fluor dotiertes Zinnoxid (FTO) enthalten.

Die Kennzeichnung von Produktionsgütern wird in fast allen Industriezweigen zunehmend wichtiger. So müssen häufig z. B. Produktionsdaten, Chargennummern, Verfallsdaten, Barcodes, 2D-Codes, Firmenlogos, Seriennummern, auf Kunststoffteilen aufgebracht werden. Wachsende Bedeutung gewinnt dabei die berührungslose, sehr schnelle und flexible Markierung mit Lasern. Mit dieser Technik ist es möglich, Beschriftungen mit hoher Geschwindigkeit auch auf eine nicht plane Oberfläche aufzubringen. Da sich die Beschriftung im Kunststoffkörper selbst befindet, ist sie dauerhaft abriebbeständig.

Da viele Kunststoffe für Laserlicht durchlässig sind, werden den Kunststoffen meist lasersensitive Mittel zugesetzt, die durch Absorption der Laserenergie im Kunststoffmaterial entweder direkt durch Wechselwirkung mit dem Polymer oder indirekt mit einem zugesetzten Material eine lokale, gut sichtbare Verfärbung hervorrufen. Das lasersensitive Mittel kann ein organischer Farbstoff oder ein Pigment sein, welches das Laserlicht absorbiert. Für die Verfärbung kann es verschiedene Ursachen geben, z. B. die Zersetzung des Polymeren oder der Absorber selbst wird von einer unsichtbaren in eine sichtbare Form umgewandelt. In der Regel kommt es zu einer Dunkelfärbung des Kunststoffs durch Karbonisierung in Folge der eingetragenen Laserenergie.

Es sind zahlreiche Additive für die Lasermarkierung von Kunststoffen bekannt, z.B. Boridverbindungen aus der WO 2006/029677 A1 oder Kupferhydroxidsphosphat bzw. Kupferphosphat für das Laserschweißen von Polymeren aus der WO 2006/042623 A1. Für die Markierung mit Nd-YAG-Lasern (Neodym-dotierte Yttrium-Aluminium-Granat-Laser), YVO₄-Laser (Yttrium-Vanadat-Laser) und 1064 nm-Faserlaser eignen sich vorzugsweise Materialien, die Licht der Wellenlänge 1064 nm absorbieren und selbst nur eine geringe Eigenfarbe aufweisen. Beispiele sind Kupferphosphate, Bismutoxid, Bismutoxichlorid, antimondotiertes Zinnoxid auf Glimmer oder Metalle. In der EP 1377522 A2 werden Additive für die Lasermarkierung von Kunststoffen beschrieben, die aus einem kalziniertem Antimon-Zinn-Mischoxid bestehen, in welchem die Antimonkonzentration an der Oberfläche höher ist als in den Teilchen als Ganzes. Die Teilchengröße beträgt 0,1 - 10 µm, vorzugsweise 0,5 - 5 µm. Mit dem Additiv werden dunkle Markierungen auf hellen Hintergründen erhalten. Es ist aber nicht möglich helle Markierungen zu erhalten.

In der EP 1720712 A1 werden hochtransparente lasermarkierbare und laserschweißbare Kunststoffmaterialien beschrieben, die dotierte Zinnoxide, Antimonoxide oder Indiumoxide mit einer Partikelgröße von 1 - 100 nm enthalten und deren Transparenz bei einer Dicke von 2 mm mehr als 85 % beträgt und weniger als 3 % Haze 3 zeigen. Die erhaltenen Markierungen sind dunkel.

Auf bunten oder dunkel eingefärbten Kunststoffteilen sind dunkle Markierungen aber nur schwer zu erkennen. Beispiele für dunkle oder bunte Kunststoffteile sind Kabelisolierungen, Tastaturen oder dunkel gefärbte Kunststoffrohre. Hier ist eine helle, möglichst weiße Beschriftung gewünscht, weil diese vor dem dunklen Hintergrund wesentlich kontrastreicher erscheint als eine graue oder schwarze Markierung. Helle Markierungen können durch Aufschäumen von Kunststoffen mittels Laserbestrahlung erzeugt werden. Dies ist aber auf wenige Polymertypen beschränkt und führt zu einer starken Veränderung der Oberfläche durch die Schaumbildung. Die mechanische Festigkeit der Oberfläche wird damit vermindert.

Die WO 2011/085779 A1 beschreibt Materialien und ein Verfahren zur Erzeugung einer hellen Lasermarkierung. Dabei werden Partikel eingesetzt, die aus einem weißen Kern und einer vorzugsweise schwarzen oder grauen Hülle, die sich durch Laserbestrahlung entfärben lässt, bestehen. Die dunkle Hülle enthält Kohlenstoff, z. B. als Ruß.

Die in der WO 2011/085779 A1 beschriebenen Materialien haben alle den Nachteil, dass sie dunkelgrau bis schwarz sind und damit die farbliche Gestaltung der Kunststoffteile wesentlich eingeschränkt ist. Insbesondere rote, blaue und grüne Farbtöne sind damit nicht oder nur eingeschränkt machbar.

Es besteht daher weiterhin ein Bedarf an Laseradditiven, die insbesondere auf farbigen oder dunklen Untergründen durch Laserbeschuss zu einer hellen bis weißen Markierung führen, welche auch unter mechanischer Belastung über einen langen Zeitraum erhalten bleibt.

Aufgabe der vorliegenden Erfindung ist es daher, ein Verfahren zur Erzeugung von kontrastreichen und mechanisch stabilen Markierungen, vorzugsweise hellen Markierungen, auf bunten oder dunklen Kunststoffgegenständen zu finden. Eine weitere Aufgabe der Erfindung ist die Bereitstellung eines Additivs für die Lasermarkierung, das keine oder nur eine geringe Eigenfarbe aufweist und unter Einwirkung von Laserlicht im damit dotierten Polymer sehr gute Markierergebnisse, insbesondere kontrastreiche und scharfe helle Markierungen auf buntem oder dunklem Grund liefert und in einer breiten Palette von Kunststoffen eingesetzt werden kann.

Eine weitere Aufgabe der vorliegenden Erfindung ist es, ein Verfahren zur Herstellung eines solchen Laseradditivs zur Verfügung zu stellen.

Überraschenderweise wurde gefunden, dass sich bunt oder dunkel eingefärbte Kunststoffartikel durch Bestrahlung mit Laserlicht hell markieren lassen, wenn der Kunststoff ein mit Fluor dotiertes Zinnoxid (FTO), vorzugsweise ein feinteiliges FTO, in geringer Konzentration enthält.

Gegenstand der Erfindung ist somit ein lasermarkierbares polymeres Material, das sich dadurch auszeichnet, dass das Polymer als Absorber ein mit Fluor dotiertes Zinnoxid (FTO) enthält. Mit Hilfe des FTO ist es möglich helle und kantenscharfe Lasermarkierungen in dunklen und bunt eingefärbten Polymeren zu erzielen.

Ein elektrisch leitfähiges Zinnoxid, das mit Fluor dotiert ist, ist bereits aus der DE 40 06 044 A1 bekannt. Für die Wirkung des FTO als Laseradditiv für eine helle Lasermarkierung ist insbesondere die Dotierung des Zinnoxids mit Fluor von Bedeutung. Der Gehalt an Fluor im fluordotierten Zinnoxid in der vorliegenden Erfindung beträgt vorzugsweise 1 - 15 Mol%, insbesondere 3 - 10 Mol% bezogen auf das Zinnoxid.

Weiterhin kann auch die Teilchengröße das Markierungsergebnis beeinflussen. Kontrastreiche helle Markierungen mit hoher Kantenschärfe werden vorzugsweise dann erhalten, wenn die Teilchengröße (D₉₀) der Partikel kleiner 5 µm, vorzugsweise kleiner 2 µm, ist. Besonders bevorzugt sind Teilchengrößen von 1 µm. Die Teilchengröße wird in dieser Anmeldung mittels Laserbeugung (Malvern) bestimmt.

Bei farbigen oder dunklen lasermarkierbaren Polymeren bzw. Kunststoffen enthält das Polymer oder der Kunststoff neben dem Laseradditiv FTO ein oder mehrere Farbmittel. Ohne ein Farbmittel ist der Kunststoff hell und transparent bis opak. Auch ohne Farbmittel werden in Gegenwart des erfindungsgemäßen FTO helle Markierungen im Polymer erhalten, die dann aber wegen des geringen Kontrastes nur schwer zu erkennen sind.

Die Konzentration des Laseradditivs im Polymeren, vorzugsweise Thermoplasten, Duroplasten, Elastomeren, ist in der Regel abhängig von dem eingesetzten Polymermaterial.

Die Einsatzkonzentration des FTO für die helle Lasermarkierung beträgt vorzugsweise 0,01 - 1 %, insbesondere 0,05 - 0,5 %, bezogen auf den Kunststoff bzw. das Polymer. Wegen seiner geringen Eigenfarbe und hohen Transparenz des FTO werden die optischen Eigenschaften des mit FTO markierten Kunststoffs bzw. Polymers nur im geringen Maße durch das Laseradditiv beeinträchtigt. Der geringe Anteil an Laseradditiv verändert das Polymersystem unwesentlich und beeinflusst auch nicht dessen Verarbeitbarkeit.

Unter Einwirkung von Laserlicht zeigt das mit FTO dotierte Polymer eine helle Markierung mit hohem Kontrast und ausgeprägter Kantenschärfe. Das bei anderen Verfahren zur hellen Markierung auftretende Aufschäumen und die damit einhergehende Aufrauung der Oberfläche wird nicht beobachtet.

Das erfindungsgemäße FTO hat vorzugsweise eine anzahlgewichtete Teilchengröße von vorzugsweise < 5 µm, gemessen am D₉₀ mittels Laserbeugung, vorzugsweise < 2 µm und besonders bevorzugt <1 µm. Dabei bestehen die Pigmentpartikel vorzugsweise aus Aggregaten von Primärpartikeln mit weniger als 100 nm Durchmesser, vorzugsweise weniger als 50 nm Durchmesser.

Das FTO kann schon bei der Herstellung durch geeignete Prozessparameter als feinteiliges Pulver mit Teilchengrößen < 5 µm gewonnen werden. Es ist aber auch möglich größere Partikel oder größere Aggregate mit Hilfe geeigneter Mühlen, z. B. Luftstrahlmühlen und/oder Perlmühlen, feinzumahlen. Das bevorzugte Mahlverfahren für die Feinstmahlung ist die Perlmühle. Damit lassen sich kristalline Materialien und Aggregate in Suspension bis zu Teilchengrößen von 50 nm heruntermahlen.

Die Mahlung wird vorzugsweise in wässriger Suspension in Gegenwart eines oder mehrerer Dispergierhilfsmittel durchgeführt. Auf diesem Weg sind ca. 50 %ige wässrige Suspensionen des FTO zugänglich. Durch Sprühtrockung oder Gefriertrocknung lässt sich feinteiliges FTO als Pulver isolieren.

Alternativ ist auch die Überführung der feingemahlenen Pigmente aus der wässrigen Suspension in eine hydrophobe Zubereitung mit Hilfe geeigneter Emulgatoren oder Schutzkolloide möglich. Die erhaltene hydrophobe, pastöse oder feste Zubereitung des FTO kann dann in Lösungsmitteln redispergiert oder in Form von Chips direkt in den Kunststoff eingearbeitet werden.

Auf Grund der geringen Einsatzkonzentrationen des feinteiligen FTOs in den Kunststoffzubereitungen ist es für die Dosierbarkeit vorteilhaft, zunächst eine stark verdünnte Zubereitung des FTOs herzustellen. Dabei wird das FTO vorzugsweise mit einem inerten Stoff gestreckt, der keine Eigenfarbe hat und mit den Kunststoffen verträglich ist. Geeignete Verdünnungsmittel sind z. B. gefällte Kieselsäuren oder pyrogene Kieselsäuren oder anorganische Füllstoffe wie Talkum, Kaoline oder Glimmer. Die Stoffe können vor der Feinmahlung zugesetzt werden oder auch danach.

In einer anderen vorteilhaften Ausführungsform wird zunächst ein Masterbatch des Kunststoffs mit einer höheren Konzentration des FTO hergestellt und dieser dann als Granulat in geringer Menge der Hauptmasse des Kunststoffes bei der Kunststoffverarbeitung zugesetzt.

Ferner können den Polymeren Farbmittel zugesetzt werden, die eine breite farbliche Variation zulassen, besonders in den Farben Rot, Grün und Blau. Geeignete Farbmittel sind insbesondere organische Pigmente und Farbstoffe.

Als polymere Materialien sind insbesondere alle bekannten Kunststoffe, insbesondere Thermoplasten, ferner Duroplasten und Elastomere, geeignet, die z.B. im Ullmann, Bd. 15, S. 457 ff., Verlag VCH beschrieben werden, können für die Lasermarkierung Anwendung finden. Geeignete thermoplastische Polymere sind z.B. Polyethylen, Polypropylen, Polyamide, Polyester, Polyetherester, Polyphenylenether, Polyacetal, Polybutylenterephthalat (PBT), Polyethylenterephthalat (PET), Polymethylmethacrylat, Polyvinylacetal, Polystyrol, Acrylnitril-Butadien-Styrol (ABS), Acrylnitril-Styrol-Acrylester (ASA), Styrol-Acrylnitril (SAN), Polycarbonat, Polyethersulfone und Polyetherketone sowie deren Copolymeren, Mischungen, und/oder Polymerblends, wie z.B. PC/ABS, MABS.

Geeignete duroplastische Polymere sind z.B. Polyurethan, Melaminharze, Polyester und Epoxydharze.

Die Einarbeitung des mit Fluor dotierten Zinnoxids kann z.B. durch Compoundierung, über ein Masterbatch, über Pasten oder durch die direkte Zugabe beim formgebenden Verarbeitungsschritt (Direktpigmentierung) erfolgen. Dem Polymeren, vorzugsweise einem Kunststoffgranulat, können bei der Einarbeitung des Absorbers gegebenenfalls ein oder mehrere Additive, wie z. B. solche ausgewählt aus der Gruppe der Prozesshilfsmittel, Stabilisatoren, Flammschutzmittel, Füllstoffe und farbgebende Pigmente, zugegeben werden. Die laborgemäße Herstellung der dotierten Kunststoffgranulate erfolgt in der Regel so, dass in einem geeigneten Mischer das Kunststoffgranulat vorgelegt, mit ein oder mehreren Dispergierhilfen benetzt und danach der Absorber und erforderliche Farbpigmente zugesetzt und untergemischt werden. In der industriellen Praxis erfolgt die Einfärbung und Additivierung des Polymeren in der Regel über ein Farbkonzentrat (Masterbatch) oder Compound. Dazu werden Farbpigmente und Additive unter hoher Scherung in Extrudern (üblicherweise gleichsinnig drehende Doppelschneckenextruder) in dem geschmolzenen Kunststoff dispergiert. Die Kunststoffschmelze tritt durch eine Lochplatte am Extruderkopf aus und wird durch geeignete Folgeeinrichtungen (z.B. Strangabschlagverfahren oder Unterwassergranulierung) zu Granulat verarbeitet. Das so erhaltene Granulat kann direkt in einem Extruder oder einer Spritzgießmaschine weiterverarbeitet werden. Die bei der Verarbeitung gebildeten Formkörper zeigen eine sehr homogene Verteilung des Absorbers. Anschließend findet die Lasermarkierung mit einem geeigneten Laser statt.

Gegenstand der Erfindung ist auch ein Verfahren zur Herstellung der erfindungsgemäßen dotierten polymeren Materialien, dadurch gekennzeichnet, dass ein polymeres Material mit dem Absorber gemischt und dann unter Wärmeeinwirkung verformt wird.

Neben den hervorragenden optischen Eigenschaften, Kontrast und Kantenschärfe, ermöglicht das feinteilige FTO schnelle Markierungen mit hohen Pulsraten und verfügt über ein großes Prozessfenster bezogen auf die Lasereinstellungen. Über die Einstellung der Laserparameter lässt sich darüber hinaus die Helligkeit der Markierung bis hin zu dunklen Markierungen gezielt steuern. Allein über die Steuerung der Laserparameter sind detailreiche Halbtonbilder zugänglich. Das Verfahren zur Bilderzeugung ist ebenfalls Gegenstand der Erfindung.

Die Beschriftung des Polymeren mit dem Laser erfolgt derart, dass der Probenkörper in den Strahlengang eines gepulsten Lasers, vorzugsweise eines Nd:YAG-Lasers, YVO₄-Lasers oder 1064 nm-Faserlasers gebracht wird. Ferner ist eine Beschriftung mit einem Excimer-Laser, z.B. über eine Maskentechnik, möglich. Jedoch sind auch mit anderen herkömmlichen Lasertypen, die eine Wellenlänge in einem Bereich hoher Absorption des verwendeten Pigments aufweisen, die gewünschten Ergebnisse zu erzielen. Die erhaltene Markierung wird durch die Bestrahlungszeit (bzw. Pulszahl bei Pulslasern) und Bestrahlungsleistung des Lasers sowie des verwendeten Kunststoffsystems bestimmt. Die Leistung der verwendeten Laser hängt von der jeweiligen Anwendung ab und kann im Einzelfall vom Fachmann ohne weiteres ermittelt werden.

Der verwendete Laser hat im Allgemeinen eine Wellenlänge im Bereich von 157 nm bis 10,6 µm, vorzugsweise im Bereich von 532 nm bis 10,6 µm. Beispielsweise seien hier CO₂-Laser (10,6 µm) und Nd:YAG-Laser (1064 bzw. 532 nm) oder gepulste UV-Laser erwähnt. Die Excimerlaser weisen folgende Wellenlängen auf: F₂-Excimerlaser (157 nm), ArF-Excimerlaser (193 nm), KrCl-Excimerlaser (222 nm), KrF-Excimerlaser (248 nm), XeCI-Excimerlaser (308 nm), XeF-Excimerlaser (351 nm), frequenzvervielfachte Nd:YAG-Laser mit Wellenlängen von 355 nm (frequenzverdreifacht) oder 265 nm (frequenzvervierfacht). Besonders bevorzugt werden Nd:YAG-Laser (1064 bzw. 532 nm), YVO₄-Laser, 1064 nm-Faserlaser oder CO₂-Laser eingesetzt. Die Energiedichten der eingesetzten Laser liegen im Allgemeinen im Bereich von 0,3 mJ/cm² bis 50 J/cm², vorzugsweise 0,3 mJ/cm² bis 10 J/cm². Bei der Verwendung von gepulsten Lasern liegt die Pulsfrequenz im Allgemeinen im Bereich von 1 bis 30 kHz. Entsprechende Laser, die im erfindungsgemäßen Verfahren eingesetzt werden können, sind kommerziell erhältlich.

Das Laserschweißen erfolgt in der Weise, dass ein lasertransparentes Material mit einem laserabsorbierenden Material verschweißt wird. Als laserabsorbierendes Material kann das FTO in Konzentrationen von 0,001 bis 10 Gew.%, vorzugsweise 0,001 bis 7 Gew.% und insbesondere 0,01 bis 3 Gew. %, bezogen auf das Polymer zugesetzt werden. Für das Laserschweißen eignen sich vorzugsweise CW Dioden-laser oder Nd:YAG Laser bei Wellenlängen von 800 - 1100 nm vorzugsweise von 808 - 1080 nm. Die Energiedichten der eingesetzten Laser liegen im Allgemeinen im Bereich von 0,3 mJ/cm² bis 200 J/cm², vorzugsweise 0,5 J/cm² bis 150 J/cm2.

Die Verwendung des erfindungsgemäß dotierten Polymeren kann auf allen Gebieten erfolgen, wo bisher übliche Schweißverfahren oder Druckverfahren zur Beschriftung oder zum Fügen von Kunststoffen eingesetzt werden. Beispielsweise können Formmassen, Halbzeuge und Fertigteile aus dem erfindungsgemäßen Polymeren in der Elektro-, Elektronik- und Kraftfahrzeugindustrie Anwendung finden. Die Kennzeichnung und Beschriftung von z.B. Kabeln, Leitungen, Zierleisten bzw. Funktionsteilen im Heizungs-, Lüftungs- und Kühlbereich oder Schalter, Stecker, Hebel und Griffe, die aus dem erfindungsgemäß dotiertem Polymeren bestehen, können selbst an schwer zugänglichen Stellen mit Hilfe von Laserlicht markiert werden. Weiterhin kann das erfindungsgemäße Polymersystem bei Verpackungen im Lebensmittelbereich oder im Spielzeugbereich eingesetzt werden. Die Markierungen auf den Verpackungen zeichnen sich dadurch aus, dass sie wisch- und kratzfest, stabil bei nachträglichen Sterilisationsprozessen, und hygienisch rein beim Markierungsprozess aufbringbar, sind. Komplette Etikettenbilder können dauerhaft auf die Verpackung für ein Mehrwegsystem aufgebracht werden. Weiterhin findet das erfindungsgemäße Polymersystem Anwendung in der Medizintechnik, beispielsweise bei der Markierung von Petrischalen, Microtiterplatten, Einmalspritzen, Ampullen, Probenbehälter, Versorgungsschläuche und medizinische Auffangbeutel bzw. Vorratsbeutel.

Ein weiteres wichtiges Anwendungsgebiet für die Laserbeschriftung sind Kunststoffmarken zur individuellen Kennzeichnung von Tieren, sogenannte Cattle Tags oder Ohrmarken. Über ein Barcodesystem werden die Informationen gespeichert, welche spezifisch dem Tier zugehörig sind. Diese können bei Bedarf wieder mit Hilfe eines Scanners abgerufen werden. Die Beschriftung muss sehr dauerhaft werden, da die Marke teilweise über mehrere Jahre an den Tieren verbleiben.

Die Lasermarkierung von Formmassen, Halbzeugen und Fertigteilen, die aus dem erfindungsgemäßen Polymer bestehen, ist somit möglich.

Die folgenden Beispiele sollen die Erfindung erläutern ohne sie jedoch zu begrenzen. Die angegebenen Prozentangaben sind Gewichtsprozent.

### Beispiele

### Beispiel 1

Eine Pulvermischung aus 47,5 g wasserfreiem Zinn(II)chlorid, 22 g Soda (wasserfrei), 5 g Natriumfluorid und 43 g Natriumchlorid werden in einer Kugelmühle mit 3,2 kg Stahlkugeln 30 min trocken gemahlen. Dabei setzt sich das Zinn(II)chlorid mit Natriumfluorid und Soda zu nanoskaligem fluordotiertem Zinnoxid um. Anschließend wird die Mischung in einem Tiegel auf 400 °C erhitzt, abgekühlt und nacheinander mit Salzsäure und mehrfach mit Wasser gewaschen. Der erhaltene Pigmentteig wird bei 110 °C getrocknet und anschließend zu feinem Pulver vermahlen. Von dem Pigmentpulver wird die Teilchengröße mit Hilfe der Laserbeugung (Malvern 2000) und der Rasterelektronenmikroskopie bestimmt. Die mittlere anzahlgewichtete Teilchengröße der Pigmentpartikel beträgt 560 nm, das D₉₀=1,2 µm, die Größe der Primärteilchen in den Aggregaten liegt im Mittel bei 40 nm.

### Beispiel 2 : Herstellung einer hydrophoben feinteiligen Pigmentzubereitung

Fluordotiertes Zinn(II)oxid (FTO) aus Beispiel 1 wird in einer Perlmühle mit Zirkonperlen in schwach saurer wässriger Suspension (pH=2) feinstgemahlen. Die durchschnittliche Teilchengröße beträgt 0,07 µm (REM). 100 ml der ca. 20 %igen Suspension werden mit 15 g polymerem Schutzkolloid (statistisches Laurylmethacrylat/Hydroxymethylmethacrylat-Copolymer, Molmasse ca. 5000) versetzt. Die Mischung wird mittels Ultraschall oder einem Hochdruckhomogenisator emulgiert.

Die Lösungsmittel werden im Vakuum abgezogen. Man erhält einen pastösen Rückstand, der aus feinteiligem FTO und Schutzkolloid besteht. Von dieser Zubereitung werden 1 g mit 5 kg PP-Granulat (Metocene X50081, Fa. Basell) vermischt. Proben der Mischung werden im Spritzguss zu 1,5 mm dicken Platten verarbeitet. Die Kunststoffplatten haben eine rote Farbe, mit einer achtfachen Lupe sind keine Partikel erkennbar. Nach der Beschriftung mit einem 12 W Nd:YAG Laser (Fa. SHT bei 300 mm/s und 0,03 mm Strahlbreite; 40-90 % Lampenenergie und einer Frequenz von 5-15kHz) zeigen die Platten eine helle Beschriftung mit hohem Kontrast.

### Beispiel 3

1 kg PP-Granulat (Metocene 648T, Fa. Basell) werden mit 2 g Dispergierhilfe (Process-Aid 24, Fa. Colormatrix) im Trommelmischer benetzt. Anschließend werden 5 g des Pigmentes aus Beispiel 1 und 1 g organisches grünes Farbpigment (PV Fast Echtgrün GG01, Fa. Clariant) zugegeben und 2 min im Trommelmischer untergemischt. Die erhaltene Mischung wird im gleichsinnig drehenden Doppelschneckenextruder unter hoher Scherung bei 250-260 °C Manteltemperatur compoundiert, durch eine Lochdüse zu einem Strang geformt, im Wasserbad abgekühlt und durch ein rotierendes Messer granuliert. Der erhaltene Compound wird bei 100 °C 1h getrocknet und auf einer Spritzgussmaschine zu Plättchen mit den Abmessungen 60 mm x 90 mm x 1,5 mm (BxHxT) verarbeitet. Die Kunststoffplättchen werden anschließend mit einem gepulsten YVO₄-Laser mit 1064 nm Wellenlänge und einer maximalen Ausgangsleistung von 10,5 W lasermarkiert. Das Testraster variiert die Geschwindigkeit zwischen 500 und 5000 mm/s und die Frequenz zwischen 20 und 100 kHz. Es werden gefüllte Flächen mit einem Linienabstand von 50 µm und darüber hinaus Linienschrift gelasert. Es werden stabile helle Lasermarkierungen bis zu einer Geschwindigkeit von 3000 mm/s erhalten. Die Linienmarkierung ist sehr definiert und detailgetreu und bestätigt die homogene Verteilung des Additivs. Unter einer 12-fachen Lupe sind keine Partikel zu erkennen.

### Beispiel 4 (Vergleich): Herstellung von Zinnoxid ohne Fluordotierung

Mit dem Verfahren nach Beispiel 1 wird feinteiliges Zinndioxid ohne F-Dotierung hergestellt. Dazu wird eine Mischung aus 47,5 g wasserfreiem Zinn(II)chlorid, 31 g Soda (wasserfrei), und 43 g Natriumchlorid in einer Kugelmühle mit 3,2 kg Stahlkugeln 30 min trocken gemahlen. Anschließend wird die Mischung in einem Tiegel auf 400 °C erhitzt, abgekühlt und nacheinander mit Salzsäure und mehrfach mit Wasser gewaschen. Der erhaltene Pigmentteig wird bei 110 °C getrocknet und anschließend zu feinem Pulver vermahlen. Die mittlere anzahlgewichtete Teilchengröße der Pigmentpartikel beträgt 630 nm, das D₉₀=1,4 µm. Das Pigment wird wie in Beispiel 3 beschrieben in den Kunststoff eingebracht und zu Plättchen verarbeitet. Diese werden wie beschrieben mit dem Laser belichtet. Es wird eine schwache, kaum erkennbare helle Markierung erhalten.

### Beispiel 5 (Vergleich): Herstellung von mit Fluor dotiertem Zinnoxid mit größeren Partikeln

Fluordotiertes Zinnoxid wird gemäß Beispiel 1 der DE 40 06 044 A1 aus Zinn(II)oxid und Zinn(II)fluorid hergestellt. Es wird ein bräunliches Pulver erhalten, dass nach dem Mahlen in einer Perlmühle eine mittlere anzahlgewichtete Teilchengröße von 2 µm und ein D₉₀=9 µm aufweist. Das erhaltene Pigment wird wie in Beispiel 3 beschrieben zu Kunststoffplatten verarbeitet und mit dem Laser belichtet. Man erhält eine dunkle, in feinen Elementen unregelmäßige Markierung, die beim Betrachten mit einer 12-fachen Lupe aus dunkel markierten Punkten besteht. Bei Belichtung mit höherer Intensität wird die Oberfläche stark aufgeraut.

## Patentansprüche

1. Lasermarkierbare und/oder laserschweißbare Polymere, **dadurch gekennzeichnet, dass** sie als Absorber mindestens ein mit Fluor dotiertes Zinnoxid (FTO) enthalten.

2. Lasermarkierbare und/oder laserschweißbare Polymere nach Anspruch 1, **dadurch gekennzeichnet, dass** der Gehalt an Fluor im FTO 1 - 15 Mol% bezogen auf das Zinnoxid beträgt.

3. Lasermarkierbare und/oder laserschweißbare Polymere nach Anspruch 1 oder 2, **dadurch gekennzeichnet, dass** das FTO eine anzahlgewichtete Teilchengröße von < 5 µm, gemessen am D₉₀ mittels Laserbeugung aufweist.

4. Lasermarkierbare und/oder laserschweißbare Polymere nach einem oder mehreren der Ansprüche 1 bis 3, **dadurch gekennzeichnet, dass** das FTO aus Aggregaten von Primärpartikeln mit weniger als 100 nm Durchmesser besteht.

5. Lasermarkierbare und/oder laserschweißbare Polymere nach einem oder mehreren der Ansprüche 1 bis 4, **dadurch gekennzeichnet, dass** das Laseradditiv in Konzentrationen von 0,01 bis 1 Gew.% bezogen auf das Polymer eingesetzt wird.

6. Lasermarkierbare und/oder laserschweißbare Polymere nach einem oder mehreren der Ansprüche 1 bis 5, **dadurch gekennzeichnet, dass** das Polymer ein Thermoplast, Duroplast oder Elastomer ist.

7. Lasermarkierbare und/oder laserschweißbare Polymere nach einem oder mehreren der Ansprüche 1 bis 6, **dadurch gekennzeichnet, dass** das Polymer zusätzlich eine oder mehrere Farbpigmente und/oder Farbstoffe enthält.

8. Verfahren zur Herstellung von lasermarkierbaren und/oder laserschweißbaren Polymeren nach einem oder mehreren der Ansprüche 1 bis 7, **dadurch gekennzeichnet, dass** die Zugabe des FTO durch Compoundierung, über ein Masterbatch oder über Pasten oder durch die direkte Zugabe dem Polymer gleichzeitig oder nacheinander erfolgt und gegebenenfalls eine oder mehrere Additive zugesetzt werden und dann das Polymer unter Wärmewirkung verformt wird.

9. Verwendung der lasermarkierbaren und/oder laserschweißbaren Polymere nach einem oder mehreren der Ansprüche 1 bis 7 als Material zur Herstellung von Formmassen, Halbzeugen, Fertigteilen und zur Bilderzeugung.

10. Formmassen, Halbzeuge und Fertigteile bestehend aus dem lasermarkierbaren und laserschweißbaren Polymer nach einem oder mehreren der Ansprüche 1 bis 7.

## Claims

1. Laser-markable and/or laser-weldable polymers, **characterised in that** they comprise at least one fluorine-doped tin oxide (FTO) as absorber.

2. Laser-markable and/or laser-weldable polymers according to Claim 1, **characterised in that** the content of fluorine in the FTO is 1 - 15 mol% based on the tin oxide.

3. Laser-markable and/or laser-weldable polymers according to Claim 1 or 2, **characterised in that** the FTO has a number-weighted particle size of < 5 µm, measured at the D₉₀ by means of laser diffraction.

4. Laser-markable and/or laser-weldable polymers according to one or more of Claims 1 to 3, **characterised in that** the FTO consists of aggregates of primary particles having a diameter of less than 100 nm.

5. Laser-markable and/or laser-weldable polymers according to one or more of Claims 1 to 4, **characterised in that** the laser additive is used in concentrations of 0.01 to 1% by weight, based on the polymer.

6. Laser-markable and/or laser-weldable polymers according to one or more of Claims 1 to 5, **characterised in that** the polymer is a thermoplastic, thermoset or elastomer.

7. Laser-markable and/or laser-weldable polymers according to one or more of Claims 1 to 6, **characterised in that** the polymer additionally comprises one or more coloured pigments and/or dyes.

8. Process for the preparation of laser-markable and/or laser-weldable polymers according to one or more of Claims 1 to 7, **characterised in that** the addition of the FTO is carried out simultaneously or successively by compounding, via a masterbatch or via pastes or by direct addition to the polymer, and optionally one or more additives are added and the polymer is then shaped under the action of heat.

9. Use of the laser-markable and/or laser-weldable polymers according to one or more of Claims 1 to 7 as material for the production of moulding compositions, semi-finished products, finished parts and for imaging.

10. Moulding compositions, semi-finished products and finished parts consisting of the laser-markable and laser-weldable polymer according to one or more of Claims 1 to 7.

## Revendications

1. Polymères marquables par laser et/ou soudables par laser, **caractérisés en ce qu'**ils comprennent au moins un oxyde d'étain dopé au fluor (FTO) en tant qu'absorbeur.

2. Polymères marquables par laser et/ou soudables par laser selon la revendication 1, **caractérisés en ce que** la teneur en fluor dans le FTO est de 1 % à 15 % (en % molaire) sur la base de l'oxyde d'étain.

3. Polymères marquables par laser et/ou soudables par laser selon la revendication 1 ou 2, **caractérisés en ce que** le FTO présente une taille de particule pondérée au nombre < 5 µm, mesurée à D₉₀ au moyen d'une diffraction laser.

4. Polymères marquables par laser et/ou soudables par laser selon une ou plusieurs des revendications 1 à 3, **caractérisés en ce que** le FTO est constitué par des agrégats de particules primaires qui présentent un diamètre inférieur à 100 nm.

5. Polymères marquables par laser et/ou soudables par laser selon une ou plusieurs des revendications 1 à 4, **caractérisés en ce que** l'additif laser est utilisé selon des concentrations de 0,01 % à 1 % en poids, sur la base du polymère.

6. Polymères marquables par laser et/ou soudables par laser selon une ou plusieurs des revendications 1 à 5, **caractérisés en ce que** le polymère est un polymère thermoplastique, un polymère thermodurci(ssable) ou un polymère élastomère.

7. Polymères marquables par laser et/ou soudables par laser selon une ou plusieurs des revendications 1 à 6, **caractérisés en ce que** le polymère comprend de façon additionnelle un ou plusieurs pigment(s) coloré(s) et/ou colorant(s).

8. Procédé pour la préparation de polymères marquables par laser et/ou soudables par laser selon une ou plusieurs des revendications 1 à 7, **caractérisé en ce que** l'ajout du FTO est mis en oeuvre de façon simultanée ou de manière successive par compoundage, via un mélange maître ou via des pâtes ou par ajout direct au polymère, et en option, un ou plusieurs additif(s) est/sont ajouté(s) et le polymère est ensuite conformé/mis en forme sous l'action de chaleur.

9. Utilisation des polymères marquables par laser et/ou soudables par laser selon une ou plusieurs des revendications 1 à 7 en tant que matériau pour la production de compositions de moulage, de produits semi-finis, de pièces finies/préfabriquées et pour l'imagerie.

10. Compositions de moulage, produits semi-finis et pièces finies/préfabriquées constitué(e)s par le polymère marquable par laser et/ou soudable par laser selon une ou plusieurs des revendications 1 à 7.
